# EUROPÄISCHE PATENTSCHRIFT

(11) **EP 3 244 049 B1**
(45) Veröffentlichungstag und Bekanntmachung des Hinweises auf die Patenterteilung: **29.01.2020**
(21) Anmeldenummer: 17166427.9
(22) Anmeldetag: 13.04.2017
(51) Int. Cl.: F02F 1/00, B23B 41/12, B23B 27/00, C23C 4/02

(54) **ZYLINDERINNENFLÄCHE EINES VERBRENNUNGSMOTORS ZUR BESCHICHTUNG MITTELS THERMISCHEN SPRITZENS SOWIE VERFAHREN ZUR HERSTELLUNG EINER ZYLINDERLAUFFLÄCHE EINES VERBRENNUNGSMOTORS**
INTERNAL SURFACE OF A CYLINDER FOR A COMBUSTION ENGINE FOR COATING BY MEANS OF THERMAL SPRAYING AND METHOD FOR PRODUCING A CYLINDER BEARING FACE OF A COMBUSTION ENGINE
SURFACE INTÉRIEURE DE CYLINDRE D'UN MOTEUR À COMBUSTION INTERNE DESTINÉE À REVÊTIR PAR PROJECTION À CHAUD ET PROCÉDÉ DE FABRICATION D'UNE SURFACE DE GLISSEMENT DE CYLINDRE D'UN MOTEUR À COMBUSTION INTERNE

(30) Priorität: 13.05.2016 DE 102016108955
(43) Veröffentlichungstag der Anmeldung: 15.11.2017
(73) Patentinhaber: KS HUAYU AluTech GmbH, 74172 Neckarsulm (DE)
(72) Erfinder: Schramm, Leander, 07407 Remda-Teichel OT Teichröda (DE); Siller, Klaus, 74613 Öhringen (DE); Gutsche, Andreas, 74206 Bad Wimpfen (DE); Klimesch, Christian, 76229 Karlsruhe (DE)
(74) Vertreter: Patentanwälte ter Smitten Eberlein-Van Hoof Rütten Partnerschaftsgesellschaft mbB

(56) Entgegenhaltungen:
- DE-A1-102011 055 516
- DE-A1-102012 021 089
- JP-A- 2011 001 614

## Beschreibung

Die Erfindung betrifft eine Zylinderinnenfläche eines Verbrennungsmotors zur Beschichtung mittels thermischen Spritzens, mit umlaufenden, sich in Achsrichtung betrachtet hintereinander angeordneten Ausstülpungen und Ausnehmungen, wobei die Ausnehmungen zu jeder benachbarten Ausstülpung einen Hinterschnitt aufweisen sowie ein Verfahren zur Herstellung einer Zylinderlauffläche eines Verbrennungsmotors aus einer derartigen Zylinderinnenfläche.

Derartig behandelte Zylinderinnenflächen sind aus dem Bereich der Herstellung von Zylinderkurbelgehäusen bekannt. Zur Verbesserung der Verschleißbeständigkeit von Zylinderlaufflächen werden die vorhandenen Zylinder mit einer Spritzschicht versehen. Um bei derartig bespritzten Zylinderlaufflächen eine ausreichend gute Zugfestigkeit und Haltbarkeit der Spritzschicht zum Zylinderkurbelgehäuse zu erreichen, werden Verklammerungsstrukturen zwischen den beiden Werkstoffen zum Verhindern eines Lösens geschaffen. Entsprechend werden die Oberflächen mechanisch behandelt, um Strukturen zu erzeugen, die die Anbindung der beiden Werkstoffe aneinander verbessern.

Es sind dabei viele verschiedene Verfahren zur Erzeugung derartiger Verklammerungsstrukturen bekannt geworden. Neben dem Sandstrahlen, durch welches eine undefinierte Struktur erzeugt wird, sind spanabhebende Verfahren bekannt geworden. Zur Erzielung eines wirksamen Hinterschnitts in der Struktur werden häufig zweistufige Verfahren verwendet, bei denen entweder zunächst eine Struktur ohne Hinterschnitte durch Spanabheben eingebracht und anschließend mechanisch umgeformt wird, oder zwei aufeinanderfolgende spanabhebende Verfahren genutzt werden, bei denen die Hinterschnitte jeweils im Vergleich zur Zylinderachse in entgegengesetzte Richtungen zeigen.

Ein derartiges Verfahren ist beispielsweise aus der DE 10 2012 021 089 A1 bekannt. Das darin offenbarte Werkzeug weist zwei gegenläufig zur Zylinderachse gekippte Schneiden auf, die eine Struktur erzeugen, bei der der Nutengrund jeweils aus zwei gerundeten Abschnitten besteht, zwischen denen eine Erhebung ausgebildet ist. Beide Abschnitte bilden zur Oberfläche einen Hinterschnitt aus. Die Verbindung zwischen der Oberfläche und dem Nutengrund erfolgt über eine gerade Wand, deren Ende zur Oberfläche abgerundet ausgebildet ist.

Es hat sich bei der Entwicklung der Werkzeuge in den letzten Jahren gezeigt, dass es zur Vermeidung eines zu großen und damit unwirtschaftlichen Verschleißes der verwendeten Schneiden vorteilhaft ist, Folgewerkzeuge zu benutzen. Diese Schneidwerkzeuge weisen hintereinander angeordnete Zähne auf, wobei das Werkzeug schraubenförmig im Zylinder gedreht wird. Jeder folgende Zahn weist dabei eine etwas größere Ausdehnung auf als der vorherige Zahn, so dass erst mit dem letzten Zahn das endgültige Profil erreicht wird. Häufig erzeugen dabei die ersten Zähne eine Grundnut und erst die hinteren Zähne schneiden die Hinterschnittstrukturen in die Oberfläche. Ein derartiges Werkzeug ist beispielsweise aus der DE 10 2008 058 452 A1 bekannt.

In der DE 10 2011 055 516 A1 wird ein mit einem solchen Werkzeug eingebrachtes Profil offenbart, welches einen Rillengrund aufweist, der in etwa parallel zum Verlauf der unbearbeiteten Oberfläche des Bauteils verläuft, und eine Seitenwand aufweist, die zur Erzeugung einer Hinterschnittstruktur in einem Winkel kleiner als 90° geneigt zum Rillengrund angeordnet ist, wobei sich an einen oberen Bereich der Seitenwand eine schräge Fläche anschließt, die mit einem Winkel größer als 90° zur Seitenwand angestellt ist.

Die bekannten Profile haben jedoch alle gemeinsam, dass ein erhöhtes Oxidwachstum beim thermischen Spritzen im Bereich der vorstehenden Spitzen an der Zylinderinnenseite entsteht, welches die Güte der aufgebrachten Verschleißschicht beeinflusst. Daher wird das thermische Spritzen häufig in einer stickstoffhaltigen Umgebung durchgeführt, um dieses Oxidieren zu vermeiden. Hierdurch entstehen jedoch zusätzliche Kosten.

Es stellt sich daher die Aufgabe, eine Zylinderinnenfläche zu schaffen, auf die auch ohne den Einsatz zusätzlichen Stickstoffs als Umgebung eine Spritzschicht aufgebracht werden kann, welche deutlich weniger Oxidwachstum aufweist, so dass eine verbesserte Zylinderlauffläche mit gleichmäßig fein in der Spritzschicht verteilten Oxiden hergestellt werden kann. Zusätzlich soll ein Verfahren zur Herstellung einer solchen Zylinderlauffläche geschaffen werden.

Diese Aufgabe wird durch eine Zylinderinnenfläche eines Verbrennungsmotors zur Beschichtung mittels thermischen Spritzens mit den Merkmalen des Anspruchs 1 sowie ein Verfahren zur Herstellung einer Zylinderlauffläche mit den Merkmalen des Anspruchs 7 gelöst.

Dadurch, dass die Zylinderinnenfläche im Bereich der Ausstülpungen vollständig konvex ausgeformt ist, wird erreicht, dass keine Spitzen auf der erzeugten Oberfläche beim Spritzen hervorstehen. An diesen vorstehenden Spitzen setzen sich Teile des Spritzguts bevorzugt ab, welche nicht an der direkt gerade bespritzten Teilfläche haften, sondern an dieser abprallen oder in sonstiger Weise aufgrund von Streuungseffekten weiter nach unten entlang der Zylinderinnenfläche fallen. Es hat sich gezeigt, dass gerade diese Spritztropfen sich verstärkt im Bereich vorhandener Spitzen absetzen. Von diesen Positionen aus kann ein verstärktes Oxidwachstum festgestellt werden. Durch die konvexen Oberflächen wird dieser Effekt deutlich gesenkt, da sich weniger Partikel an den Erhebungen absetzen und dort ungewollt unter Lufteinschluss aufbauen. Entsprechend wird das Oxidwachstum in der Spritzschicht deutlich gesenkt, wodurch die Spritzschichten einen deutlich gleichmäßigeren Aufbau mit gleichmäßig fein verteilten Oxiden aufweisen.

Bezüglich des Verfahrens zur Herstellung einer Zylinderlauffläche wird die Aufgabe dadurch gelöst, dass eine gegossene Zylinderoberfläche zur Bildung einer Zylinderinnenfläche mit konkaven Ausnehmungen und vollständig konvexen Ausstülpungen durch Spanabheben mittels eines Folgewerkzeugs bearbeitet wird und anschließend die Zylinderinnenfläche thermisch bespritzt wird. Ein solches Schneidwerkzeug eignet sich besonders gut zur Erzeugung der konvexen Oberflächenstruktur, da Ausbrüche an der Zylinderinnenfläche vermieden werden müssen, um tatsächlich eine gleichmäßige konvexe Oberflächenstruktur zu erhalten.

Vorzugsweise ist die Zylinderinnenfläche im Bereich der Ausnehmungen vollständig konkav ausgeformt. So werden auch im Bereich der Hinterschnitte unerwünschte wachsende Ablagerungen mit Lufteinschlüssen an Teilstücken, die noch nicht aktiv bespritzt sind, verringert, wodurch erneut das Gefüge verbessert wird.

Besonders gute Ergebnisse des Gefüges werden erzielt, wenn die Oberflächen der Ausnehmungen und die Ausstülpungen jeweils teilkreisförmig mit einem konstanten Radius ausgebildet sind. Eine solche Struktur führt sowohl zu einer sehr guten Festigkeit der Spritzschicht am Bauteil als auch zu verringertem Oxidwachstum.

In einer besonders vorteilhaften Weiterbildung der Erfindung gehen die konvexen Ausstülpungen und die konkaven Ausnehmungen unmittelbar ineinander über, so dass gerade Flächen sowie nicht stetige Übergänge vollständig entfallen. Es entsteht ein Gefüge mit sehr fein verteilten Oxideinschlüssen.

In einer weiterführenden Ausführungsform sind die Radien der Ausstülpungen und der Ausnehmungen gleich groß. Ein solches Werkzeug zur Herstellung einer derartigen Struktur ist einfach herzustellen. Zusätzlich weist die bespritzte Zylinderinnenfläche auch sehr gleichmäßige Zugfestigkeitswerte auf.

In einer alternativen Ausbildung weist die Zylinderinnenfläche im Bereich der Ausnehmungen jeweils an den axialen Enden der Ausnehmungen einen Radius auf. Entsprechend sind Geraden immer nur am Nutgrund oder den Seitenflächen vorhanden, welche deutlich seltener bei der Beschichtung durch umherfliegende Partikel getroffen werden, so dass auch mit dieser Ausführung gute Gefügequalitäten der Spritzschicht erzeugt werden.

Es wird somit eine Zylinderinnenfläche zum Bespritzen mittels thermischen Spritzens geschaffen, welche derart ausgebildet ist, dass nach dem Bespritzen eine sehr gute Zugfestigkeit und qualitativ hochwertige Gefügeausbildung der Schicht erzielt wird. Unerwünschtes Oxidwachstum im Innern der Spritzschicht kann durch eine derartige Verklammerungsstruktur zuverlässig vermieden werden. Des Weiteren wird ein Verfahren zur Verfügung gestellt, mit dem eine derartige strukturell definierte Zylinderinnfläche einfach und kostengünstig hergestellt werden kann.

Eine erfindungsgemäße Zylinderinnenfläche eines Verbrennungsmotors zur Beschichtung mittels thermischen Spritzens sowie ein Verfahren zur Herstellung einer derartigen Zylinderinnenfläche werden anhand der Figuren im Folgenden erläutert.
Figur 1 zeigt eine Seitenansicht eines Zylinderkurbelgehäuses mit einer erfindungsgemäßen mit einer thermischen Spritzschicht versehenen Zylinderinnenfläche in geschnittener Darstellung.
Figur 2 zeigt einen vergrößerten Querschnitt einer Zylinderinnenfläche aus Figur 1 vor der Bearbeitung.
Figur 3 zeigt die Zylinderinnenfläche der Figur 2 nach der spanabhebenden Bearbeitung.
Figur 4 zeigt die Zylinderinnenfläche gemäß Figur 3 nach dem thermischen Spritzen.
Figur 5 zeigt schematisch ein Werkzeug zur Herstellung einer erfindungsgemäßen Zylinderinnenfläche.

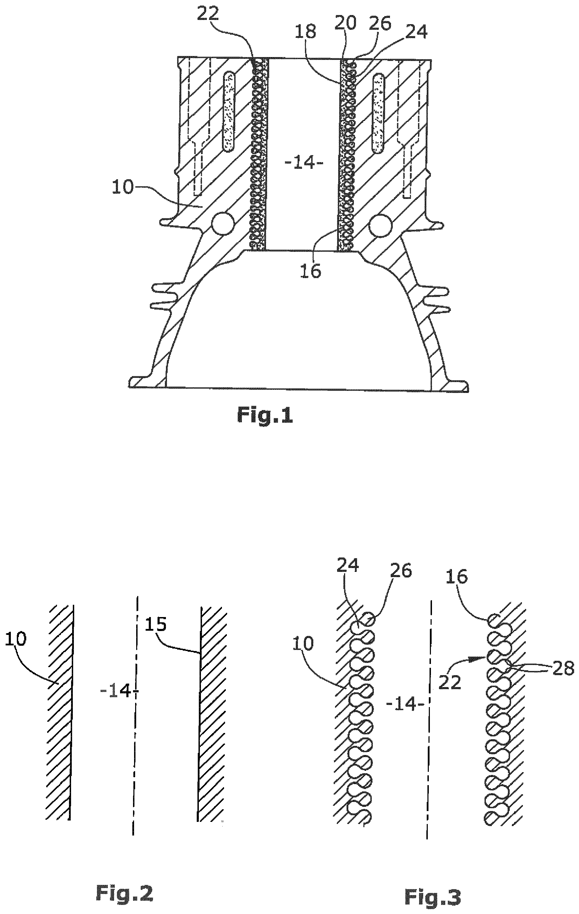

In der Figur 1 ist ein Zylinderkurbelgehäuse 10 eines Reihen-Verbrennungsmotors dargestellt, welcher beispielswiese vier hintereinander liegende Zylinder 14 aufweist. Ein derartiges Zylinderkurbelgehäuse 10 wird beispielsweise aus einer Aluminiumlegierung durch Druckgießen hergestellt. Die zum Inneren des Zylinders 14 weisenden Oberflächen 15 werden dabei durch gegebenenfalls gekühlte Pinolen gebildet, die während des Gießprozesses zur Begrenzung der Zylinder 14 dienen.

Eine innere Oberfläche des fertiggestellten Zylinders 14 dient als Zylinderlauffläche 18 für einen im Zylinder 14 auf- und abbewegten Kolben, so dass die Lauffläche 18 sowohl hohen thermischen als auch chemischen und mechanischen Belastungen ausgesetzt ist. Aus diesem Grund werden die gegossenen Zylinderoberflächen 15 mit einer thermischen Spritzschicht 20 versehen, welche sehr verschleißfest ist. Um diese verschleißfesten Spritzschichten 20 zuverlässig mit dem Zylinderkurbelgehäuse 10 zu verbinden und ausreichende Zugfestigkeiten der Verbindung sicherzustellen, werden die Zylinderoberflächen 15 vor dem Aufbringen der Spritzschicht 20 mit einer Verklammerungsstruktur 22 versehen.

Eine solche Verklammerungsstruktur 22 weist in Achsrichtung betrachtet sich abwechselnde Ausnehmungen 24 und Ausstülpungen 26 auf, die sich schraubenförmig entlang einer so gebildeten Zylinderinnenfläche 16 erstrecken, wie dies insbesondere in Figur 3 sichtbar ist. Denkbar ist auch, diese Ausnehmungen 24 und Ausstülpungen 26 in wechselnder Folge jeweils vollumfänglich geschlossen auszubilden. Die Höhendifferenz zwischen den Ausstülpungen 26 und den Ausnehmungen 24 beträgt dabei üblicherweise zwischen 0,1 und 0,5 mm, der axiale Abstand zwischen den Ausstülpungen 26 entsprechend ebenfalls.

Die Zylinderinnenfläche 16 weist im Querschnitt erfindungsgemäß im Bereich der Ausnehmungen 24 jeweils eine konkave Form auf, die in eine konvexe Form im Bereich der beidseits benachbarten Ausstülpungen 26 unmittelbar und stetig übergeht.

Im vorliegenden Ausführungsbeispiel handelt es sich bei den konvexen und konkaven Formen der Zylinderinnenfläche 16 jeweils um Teilkreise mit konstanten und gleichen Radien für die Ausnehmungen 24 und Ausstülpungen 26, welche sich über etwa 200°-270° erstrecken. Entsprechend entstehen hinter den konvexen Ausstülpungen 26 im Bereich der Ausnehmungen 24 Hinterschnitte 28, also Bereiche die bei Ansicht von der Zylinderachse aus im Blickschatten der Ausstülpungen 26 im Bereich der Ausnehmungen 24 angeordnet sind und durch die die Verklammerungsstruktur 22 eine deutlich verbesserte Haftung für die Spritzschicht 20 erzeugt.

Ausgangspunkt bei der Herstellung einer derartigen Verklammerungsstruktur 22 ist ein gegossenes Zylinderkurbelgehäuse 10 mit einer glatten Zylinderoberfläche 15, wie sie in Figur 2 dargestellt ist.

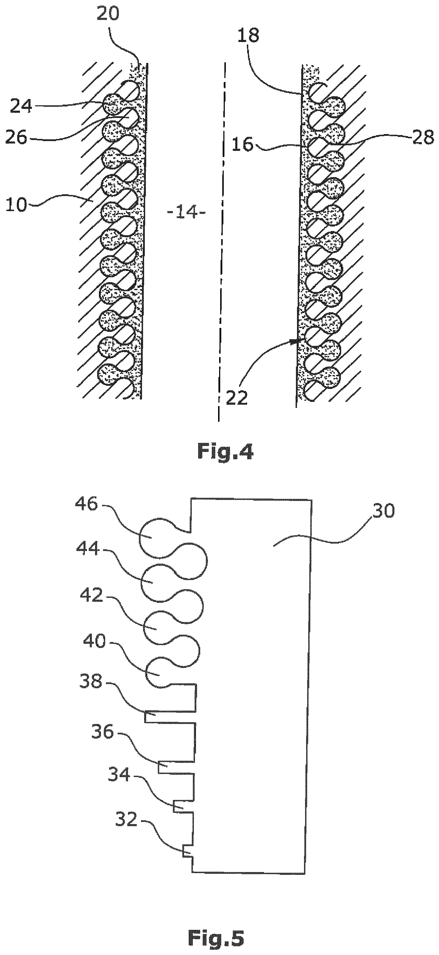

Entlang dieser Oberfläche 15 wird im Weiteren ein Folgewerkzeug 30, wie es in Figur 5 dargestellt ist, in den Zylinder 14 eingeführt und schraubenförmig entlang der Zylinderoberfläche 15 von oben nach unten bewegt. Das Werkzeug 30 ist ein Folgewerkzeug, welches entsprechend immer nur einen Teil des gesamten abzutragenden Materials spanabhebend aus der Zylinderoberfläche 16 schneidet. Das Werkzeug 30 schneidet im vorliegenden Ausführungsbeispiel mit seinem ersten Zahn 32 zunächst lediglich eine kleine rechteckige Nut aus der Zylinderoberfläche 15, deren Größe mit den folgenden Zähnen 34, 36, 38 wächst. Im weiteren Verlauf werden mit den Zähnen 40, 42, 44, 46 wachsende Hinterschnitte 28 erzeugt und auch die bis dahin nicht bearbeiteten Oberflächenabschnitte weiter abgetragen, bis schließlich die endgültige Form Zylinderinnenfläche 16 mit den Ausstülpungen 26 und Ausnehmungen 24 vorliegt.

Nach dem Erzeugen dieser Zylinderinnenfläche 16 wird ein Spritzbrenner zum Aufbringen einer thermischen Spritzschicht 20 in den Zylinder 14 eingeführt. Dieser vollzieht ebenfalls eine Kreisbewegung, welche durch eine Abwärtsbewegung im Zylinder 14 überlagert ist. Bei diesem Spritzvorgang, der beispielsweise mittels eines Plasma-Transferred- Wire-Arc-Spritzverfahrens durchgeführt wird, entsteht eine gut haftende Spritzschicht 20, die als Zylinderlauffläche 18 dient, wie sie in der Figur 4 nach der Fertigstellung dargestellt ist.

Neben der aufgebrachten, erwünscht aufgebrachten Spritzschicht 20 treffen jedoch auch einzelne geschmolzene Partikel, die nicht exakt entlang des gewünschten Kegels auf die Zylinderinnenfläche 16 beschleunigt werden, mit erhöhter Streuung auf einen noch nicht beschichteten Bereich. Ebenso prallen zum Teil Partikel an der Zylinderinnenfläche 16 ab, ohne haften zu bleiben. Durch die erfindungsgemäßen Verklammerungsstrukturen 22 wird das verstärkte Anhaften dieser Streupartikel vermieden, da keine vorstehenden Spitzen und auch keine größeren glatten Auflageflächen vorhanden sind. Aus diesem Grunde sammelt sich ein Großteil der Streupartikel am Boden unterhalb des Zylinderkurbelgehäuses. Durch das geringere Oxidwachstum können so aufgrund der erfindungsgemäßen Verklammerungsstruktur bessere Gefüge mit fein verteilten Oxiden geschaffen werden, die eine sehr hohe Verschleißbeständigkeit aufweisen. Zusätzlich werden Spannungsspitzen im Gefüge verhindert. Auch besteht eine gute Haftzugfestigkeit der Beschichtung am Zylinderkurbelgehäuse.

Selbstverständlich ist die Erfindung nicht auf die im Ausführungsbeispiel beschriebe Ausführung der Zylinderinnenfläche oder des verwendeten Werkzeugs beschränkt. So kann die Zylinderinnenfläche auch Ausstülpungen und Ausnehmungen mit unterschiedlichen Radien aufweisen oder die Radien nicht über die Erstreckung einer Ausstülpung oder einer Ausnehmung unverändert sein. Auch können die Zähne des Werkzeugs anders geformt sein, so dass beispielswiese die Hinterschnitte nacheinander ausgebildet werden oder die Aufweitung der Nut an der Oberfläche an vorgelagerten Zähnen durchgeführt wird. Weitere konstruktive Änderungen sind selbstverständlich ebenfalls denkbar, ohne den Schutzbereich der Hauptansprüche zu verlassen.

## Patentansprüche

1. Zylinderinnenfläche (22) eines Verbrennungsmotors zur Beschichtung mittels thermischen Spritzens, mit
umlaufenden, axial nebeneinander angeordneten Ausstülpungen (26) und Ausnehmungen (24),
wobei die Ausnehmungen (24) zu jeder benachbarten Ausstülpung (26) einen Hinterschnitt (28) aufweisen,
**dadurch gekennzeichnet, dass**
die Zylinderinnenfläche (22) im Bereich der Ausstülpungen (26) vollständig konvex ausgeformt ist.

2. Zylinderinnenfläche (22) eines Verbrennungsmotors zur Beschichtung mittels thermischen Spritzens nach Anspruch 1,
**dadurch gekennzeichnet, dass**
die Zylinderinnenfläche (22) im Bereich der Ausnehmungen (24) vollständig konkav ausgeformt ist.

3. Zylinderinnenfläche (22) eines Verbrennungsmotors zur Beschichtung mittels thermischen Spritzens nach Anspruch 1 oder 2,
**dadurch gekennzeichnet, dass**
die Oberflächen der Ausnehmungen (24) und die Ausstülpungen (26) jeweils teilkreisförmig mit einem konstanten Radius ausgebildet sind.

4. Zylinderinnenfläche (22) eines Verbrennungsmotors zur Beschichtung mittels thermischen Spritzens nach einem der vorhergehenden Ansprüche,
**dadurch gekennzeichnet, dass**
die konvexen Ausstülpungen (26) und die konkaven Ausnehmungen (24) unmittelbar ineinander übergehen.

5. Zylinderinnenfläche (22) eines Verbrennungsmotors zur Beschichtung mittels thermischen Spritzens nach einem der Ansprüche 3 oder 4,
**dadurch gekennzeichnet, dass**
die Radien der Ausstülpungen (26) und der Ausnehmungen (24) gleich groß sind.

6. Zylinderinnenfläche (22) eines Verbrennungsmotors zur Beschichtung mittels thermischen Spritzens nach Anspruch 1,
**dadurch gekennzeichnet, dass**
die Zylinderinnenfläche (22) im Bereich der Ausnehmungen (24) jeweils an den axialen Enden der Ausnehmungen (24) einen Radius aufweist.

7. Verfahren zur Herstellung einer Zylinderlauffläche (18) eines Verbrennungsmotors nach einem der vorhergehenden Ansprüche,
**dadurch gekennzeichnet, dass**
eine gegossene Zylinderoberfläche (15) zur Bildung einer Zylinderinnenfläche (22) mit konkaven Ausnehmungen (24) und vollständig konvexen Ausstülpungen (26) durch Spanabheben mittels eines Folgewerkzeugs (30) bearbeitet wird und anschließend die Zylinderinnenfläche (22) thermisch bespritzt wird.

## Claims

1. Cylinder inner surface (22) of an internal combustion engine for coating by thermal spraying, comprising
circumferentially extending, axially juxtaposed protrusions (26) and recesses (24),
wherein the recesses (24) have an undercut (28) to each juxtaposed protrusion (26),
**characterized in that**
the cylinder inner surface (22) is entirely convex in the region of the protrusions (26).

2. Cylinder inner surface (22) of an internal combustion engine for coating by thermal spraying of claim 1, **characterized in that** the cylinder inner surface (22) is formed entirely concave in the region of the recesses (24).

3. Cylinder inner surface (22) of an internal combustion engine for coating by thermal spraying of claim 1 or 2, **characterized in that** the surfaces of the recesses (24) and the protrusions (26) are each formed as a partial circle with a constant radius.

4. Cylinder inner surface (22) of an internal combustion engine for coating by thermal spraying of one of the preceding claims, **characterized in that** the convex protrusions (26) and the concave recesses (24) transition directly into one another.

5. Cylinder inner surface (22) of an internal combustion engine for coating by thermal spraying of one of claims 3 or 4, **characterized in that** the radii of the protrusions (26) and the recesses (24) are equal.

6. Cylinder inner surface (22) of an internal combustion engine for coating by thermal spraying of claim 1, **characterized in that** the cylinder inner surface (22) respectively has a radius in the region of the recesses (24) at the axial ends of the recesses (24).

7. Method for producing a cylinder running surface (18) of an internal combustion engine of one of the preceding claims, **characterized in that** a cast cylinder surface (15) for forming a cylinder inner surface (22) with concave recesses (24) and entirely convex protrusions (26) is machined by means of a follow-on tool (30) and the cylinder inner surface (22) is thermally sprayed thereafter.

## Revendications

1. Surface intérieure de cylindre (22) d'un moteur à combustion interne destinée à être revêtue par projection thermique, comprenant
des protubérances (26) et des évidements (24) circonférentiels, axialement juxtaposés,
les évidements (24) présentent une dépouille (28) vers chaque protubérance adjacente (26),
**caractérisée en ce que**
la surface interne du cylindre (22) est parfaitement convexe dans la région des protubérances (26).

2. Surface intérieure de cylindre (22) d'un moteur à combustion interne destinée à être revêtue par projection thermique selon la revendication 1, **caractérisée en ce que** la surface intérieure du cylindre (22) est parfaitement concave dans la région des évidements (24).

3. Surface intérieure de cylindre (22) d'un moteur à combustion interne destinée à être revêtue par projection thermique selon la revendication 1 ou 2, **caractérisée en ce que** les surfaces des évidements (24) et les protubérances (26) sont chacune formées sous forme d'une partie de cercle à rayon constant.

4. Surface intérieure de cylindre (22) d'un moteur à combustion interne destinée à être revêtue par projection thermique selon l'une quelconque des revendications précédentes, **caractérisée en ce que** les protubérances convexes (26) et les évidements concaves (24) passent directement l'un dans l'autre.

5. Surface intérieure de cylindre (22) d'un moteur à combustion interne destinée à être revêtue par projection thermique selon l'une des revendications 3 ou 4, **caractérisée en ce que** les rayons des protubérances (26) et des évidements (24) sont égaux.

6. Surface intérieure de cylindre (22) d'un moteur à combustion interne destinée à être revêtue par projection thermique selon la revendication 1, **caractérisée en ce que** la surface intérieure du cylindre (22) a un rayon dans la région des évidements (24) aux extrémités axiales des évidements (24).

7. Procédé de fabrication d'une surface de glissement du cylindre (18) d'un moteur à combustion interne selon l'une quelconque des revendications précédentes, **caractérisé en ce qu'**une surface de cylindre coulée (15) est usinée par enlevage de matière pour former une surface interne de cylindre (22) avec des évidements concaves (24) et des protubérances convexes (26) au moyen d'un outil suiveur (30), et ensuite la surface interne du cylindre (22) est revêtue thermiquement.
